# EUROPÄISCHE PATENTSCHRIFT

(11) **EP 3 887 216 B1**
(45) Veröffentlichungstag und Bekanntmachung des Hinweises auf die Patenterteilung: **03.05.2023**
(21) Anmeldenummer: 19812669.0
(22) Anmeldetag: 08.11.2019
(51) Int. Cl.: B60T 7/10, B60T 11/236, B60T 11/232

(54) **GEBERZYLINDER MIT DICHTELEMENT**
MASTER CYLINDER WITH SEAL ELEMENT
MAÎTRE-CYLINDRE AVEC ÉLÉMENT D'ÉTANCHÉITÉ

(30) Priorität: 30.11.2018 DE 102018130507
(43) Veröffentlichungstag der Anmeldung: 06.10.2021
(73) Patentinhaber: Schaeffler Technologies AG & Co. KG, 91074 Herzogenaurach (DE)
(72) Erfinder: ORTMANN, Simon, 76532 Baden-Baden (DE); ALTHERR, Jannick Dominik Herbert, Singapore 128807 (SG); MAYER, Marcel Philipp, Singapore 276693 (SG)
(86) Internationale Anmeldenummer: PCT/DE2019/100963
(87) Internationale Veröffentlichungsnummer: WO 2020/108691

(56) Entgegenhaltungen:
- WO-A1-2018/145691
- DE-A1-102013 217 056

## Beschreibung

Die Erfindung betrifft einen Geberzylinder für ein Bremssystem mit einem Dichtelement.

In Bremssystemen wird, bei Fahrrädern beispielsweise über einen Handhebel, ein Kolben in einem Geberzylinder bewegt, um in einem mit einer Hydraulikflüssigkeit gefüllten Druckraum Druck aufzubauen. Dieser Druck wird über einen Anschluss an einen Nehmerzylinder weitergegeben, über welchen durch einen darin beweglichen Kolben die Bremse betätigt wird. Um die Hydraulikflüssigkeit in dem Geberzylinder zu halten, sind Dichtungen vorgesehen. Dennoch kann es zu Verlusten an Hydraulikflüssigkeit kommen, welche aus einem Reservoir ausgeglichen werden müssen; das Reservoir kann bevorzugt an einem Gehäuse des Geberzylinders angebracht sein. Der Ausgleich soll bevorzugt drucklos erfolgen und die Funktion des Kupplungs- oder Bremssystems, speziell des Geberzylinders, nicht negativ beeinflussen.

Aus der deutschen Offenlegungsschrift DE 10 2013 217 056 A1 ist eine für lenkergeführte Fahrzeuge vorgesehene Geberarmatur offenbart, welche über einen Handhebel betätigt wird. Über den Handhebel wird ein Kolben in einem Druckraum verschoben. Dabei bewegt der Kolben ein Dichtelement mit, welches eine Zuführung für Hydraulikfluid aus einem an der Geberarmatur angebrachten Reservoir in den Druckraum verschließt. Ein weiteres Dichtelement dichtet die Geberarmatur gegen die Umgebung ab.

Aus der WO 2018/145691 A1 ist ein pedalbetätigter Geberzylinder für ein Kupplungs- oder Bremssystem eines Kraftfahrzeugs mit einer Dichtung mit einer inneren primären Dichtlippe und einer äußeren Dichtstruktur offenbart.

Aufgabe der Erfindung ist es, einen Geberzylinder anzugeben, bei dem die Abdichtung durch eine reduzierte Anzahl Komponenten erzielt werden kann.

Diese Aufgabe wird gelöst durch einen Geberzylinder gemäß Anspruch 1.

Die Unteransprüche enthalten vorteilhafte Ausgestaltungen.

Der erfindungsgemäße Geberzylinder für ein Bremssystem verfügt über ein Gehäuse, in dem ein Druckraum ausgebildet ist. Ein Kolben ist zumindest teilweise in den Druckraum einführbar, und kann so in dem Druckraum Druck aufbauen, der in bekannter Weise an einen Nehmerzylinder weitergegeben werden kann. Am Gehäuse ist ein Reservoir für Hydraulikfluid vorgesehen, aus dem Hydraulikfluid über eine Zuführung in den Druckraum gelangen kann, um Verluste an Hydraulikfluid auszugleichen. Zwischen dem Gehäuse und dem Kolben ist ein, vorzugsweise ringförmiges, Dichtelement angeordnet. Das Dichtelement hat eine äußere Dichtlippe zur Abdichtung der Zuführung für Hydraulikfluid gegen den Druckraum; die Dichtlippe dichtet bei Verschiebung des Kolbens in Richtung des Druckraums die Zuführung gegen den Druckraum ab, so dass im Druckraum Druck aufgebaut werden kann. Erfindungsgemäß hat das Dichtelement auf einer dem Druckraum abgewandten Seite des Dichtelements eine Dichtstruktur ausgebildet, welche den Druckraum gegen eine Umgebung des Druckraums abdichtet. Auf diese Weise entfällt die Notwendigkeit für eine separate Dichtung zur Abdichtung des Druckraums gegen die Umgebung, somit ist die Anzahl der erforderlichen Komponenten reduziert.

In einer Ausführungsform hat das Dichtelement eine innere Dichtlippe, welche dem Druckraum zugewandt und dem Kolben benachbart ist. Die innere Dichtlippe dient in Zusammenwirkung mit der äußeren Dichtlippe vorwiegend dazu, die Zuführung für Hydraulikfluid gegen den Druckraum abzudichten oder zu verschließen, wenn in dem Druckraum ein Überdruck aufgebaut wird, wenn also der Kolben in den Druckraum eingeführt wird. Hierzu drückt der Kolben bei Einführung in den Druckraum die innere Dichtlippe radial nach außen, und in Folge der dadurch bewirkten elastischen Deformation des Dichtelements wird die äußere Dichtlippe gegen das Gehäuse gedrückt und dichtet so die im Bereich des Dichtelements vorgesehene Zuführung für Hydraulikfluid gegen den Druckraum ab. Diese Zusammenwirkung des Kolbens mit dem Dichtelement wird in einer Ausgestaltung besonders dadurch unterstützt, dass der Kolben auf der dem Druckraum zugewandten Seite, genauer in dem Bereich, welcher mit der inneren Dichtlippe in Kontakt kommen soll, eine Fase aufweist. Durch die Bewegung des Kolbens in Richtung des Druckraums, vorzugsweise eines Kolbens mit einer Fase wie eben erwähnt, sind also die innere und die äußere Dichtlippe in der eben dargelegten Weise vorspannbar, was zu einer Abdichtung der Zuführung für Hydraulikfluid gegenüber dem Druckraum führt. Die innere Dichtlippe wird dabei gegen den Kolben, bei einem Kolben mit Fase gegen die Fase, gedrückt und dichtet dadurch im Bereich des Kolbens bzw. der Fase den Druckraum ab. In jeder Ausführungsform der Erfindung erfolgt die Abdichtung der Zuführung für Hydraulikfluid gegen den Druckraum dadurch, dass die äußere Dichtlippe radial nach außen gegen das Gehäuse gedrückt wird. Das Dichtelement wird dabei nicht in einer axialen Richtung mit dem Kolben mitbewegt.

In einer Ausgestaltung umfasst die Dichtstruktur eine äußere Dichtstruktur und eine innere Dichtstruktur. Innere wie äußere Dichtstruktur können beispielsweise in O-Ring-Geometrie ausgebildet sein. Die äußere Dichtstruktur kann die äußere Dichtlippe in radialer Richtung nach außen überragen.

In einer Ausführungsform ist am Dichtelement zwischen der äußeren Dichtlippe und der Dichtstruktur eine Anschlagsstruktur vorgesehen. Die Anschlagsstruktur ist durch einen oder mehrere am Dichtelement ausgeformte Vorsprünge gebildet und dazu vorgesehen, gegen das Gehäuse zu stoßen. Die Anschlagsstruktur stellt einen definierten Anschlag für das Dichtelement bei Einbau in den Geberzylinder dar und dient zur Maßeinstellung. Ferner ermöglicht die Anschlagsstruktur auch eine Aufteilung der Kontaktdrücke des Dichtelements gegen das Gehäuse. Dabei ist diese Aufteilung durch die Anzahl und Formgebung der Vorsprünge beeinflussbar. Als Material für das Dichtelement kommen alle üblichen Elastomere in Frage.

In einer Ausführungsform ist wenigstens eine radiale Bohrung in das Dichtelement eingebracht. In einer speziellen Weiterbildung oben beschriebener Ausführungsformen verläuft die Bohrung von einer Stelle zwischen der äußeren Dichtlippe und der äußeren Dichtstruktur zu einer Stelle zwischen der inneren Dichtlippe und der inneren Dichtstruktur.

In einer Ausführungsform des Geberzylinders ist auf einer dem Gehäuse zugewandten Seite des Dichtelements mindestens eine Eintiefung vorgesehen. Die mindestens eine Eintiefung gewährleistet ein besseres Entlüften, insbesondere trotz Fertigungstoleranzen. Gleichfalls gewährleistet die mindestens eine Eintiefung einen verbesserten Fluss des in den Druckraum nachzuführenden Hydraulikfluids.

In einer Ausführungsform ist ein Dichtungshalter zur Fixierung des Dichtelements im Gehäuse vorgesehen. Der Dichtungshalter kann beispielsweise mit dem Gehäuse verschweißt oder verschraubt werden. Es sind aber auch andere Möglichkeiten zur Befestigung des Dichtungshalters im Gehäuse denkbar. Bei kleineren Arbeitsdrücken des Geberzylinders kann auch eine Pressverbindung zwischen Dichtungshalter und Gehäuse in Betracht gezogen werden.

Allgemein kann das Reservoir als Kammer ausgebildet sein, zu deren Verschluss gegen die Umgebung ein Deckel vorgesehen ist. Der Deckel kann beispielsweise verschweißt, oder, unter Einbeziehung einer Dichtung, verschraubt, vernietet oder anderweitig befestigt werden. Ist vorgesehen, den Deckel mit der Kammer zu verschweißen, so ist der Deckel vorteilhaft lasertransparent ausgebildet. Ist der Deckel im Bereich des sichtbaren Lichts transparent, so kann dies vorteilhaft zur Füllstandskontrolle genutzt werden. Die Kammer weist vorzugsweise eine Entlüftungseinrichtung auf. Dabei kann es sich um eine Verschlussschraube handeln, über die die Kammer befüllt und auch entlüftet werden kann.

Erfindungsgemäß ist das Gehäuse zweiteilig ausgebildet. Dabei trägt ein erster Gehäuseteil mechanische Elemente zur Betätigung des Kolbens. Ein zweiter Gehäuseteil umschließt den Druckraum. Ferner kann der zweite Gehäuseteil das Reservoir und die Zuführung für Hydraulikfluid tragen, sowie einen Anschluss für eine Hydraulikleitung zu einem Nehmerzylinder. Außerdem kann der zweite Gehäuseteil Mittel aufweisen, mit denen der Geberzylinder in einer Einbauumgebung befestigt werden kann. Es kann sich dabei etwa um Mittel handeln, mit denen der Geberzylinder am Lenker eines Fahrrades befestigt werden kann. In einer Abwandlung ist es auch möglich, dass die Mittel zur Befestigung des Geberzylinders in einer Einbauumgebung am ersten Gehäuseteil ausgebildet sind. In jedem Fall erfüllt der erste Gehäuseteil die Funktionen des Schutzes vor Verschmutzung, des Anschlages für den Kolben bei Bewegung in axialer Richtung aus dem Druckraum und des Dichtungshalters, also Funktionen, die in anderen, oben beschriebenen, Ausführungsformen von separaten Bauteilen erfüllt werden.

In einer Ausführungsform ist im Druckraum eine Rückstellfeder für den Kolben vorgesehen. Gemäß der Erfindung ist am Gehäuse ein Handhebel zur Verschiebung des Kolbens vorgesehen.

Der Vorteil einer oben erläuterten zweiteiligen Ausführung des Gehäuses bei Verwendung eines Handhebels ist, dass die hydraulische Fläche, bzw. der Durchmesser der Dichtung, deutlich größer gewählt werden kann, ohne dass das Hebelverhältnis des Handhebels geändert werden muss. Im Stand der Technik kollidiert sonst der Druckraum mit Laschen zur Befestigung des Handhebels und zugehöriger Mechanik.

Nachfolgend werden die Erfindung und ihre Vorteile unter Bezugnahme auf die beigefügten Zeichnungen näher erläutert, wobei die erfindungsgemäße Gehäuseform lediglich in den Figuren 9 bis 11 gezeigt ist.
- Figur 1: zeigt eine perspektivische Ansicht eines erfindungsgemäßen Geberzylinders.
- Figur 2: zeigt eine Schnittansicht des in Fig. 1 gezeigten Geberzylinders.
- Figur 3: zeigt eine weitere Schnittansicht eines erfindungsgemäßen Geberzylinders.
- Figur 4: zeigt eine weitere Schnittansicht eines erfindungsgemäßen Geberzylinders.
- Figur 5: zeigt eine Detailansicht einer Schnittansicht eines erfindungsgemäßen Geberzylinders.
- Figur 6: zeigt eine Schnittansicht des Dichtelements, eingesetzt in einen erfindungsgemäßen Geberzylinder.
- Figur 7: zeigt eine Schnittansicht des Dichtelements, eingesetzt in einen erfindungsgemäßen Geberzylinder, bei verschobenem Kolben.
- Figur 8: zeigt eine perspektivische Ansicht des Dichtelements.
- Figur 9: zeigt eine Schnittansicht eines erfindungsgemäßen Geberzylinders mit zweiteiligem Gehäuse.
- Figur 10: zeigt eine perspektivische Ansicht des Geberzylinders aus Figur 9.
- Figur 11: zeigt eine Detailansicht einer Schnittansicht des Geberzylinders aus Figur 9.
- Figur 12: zeigt ein weiteres Ausführungsbeispiel eines Dichtelements in Schnittansicht.

Die Zeichnungen stellen lediglich Ausführungsbeispiele der Erfindung dar und sind daher nicht als Einschränkung der Erfindung auf die gezeigten Ausführungsbeispiele aufzufassen.

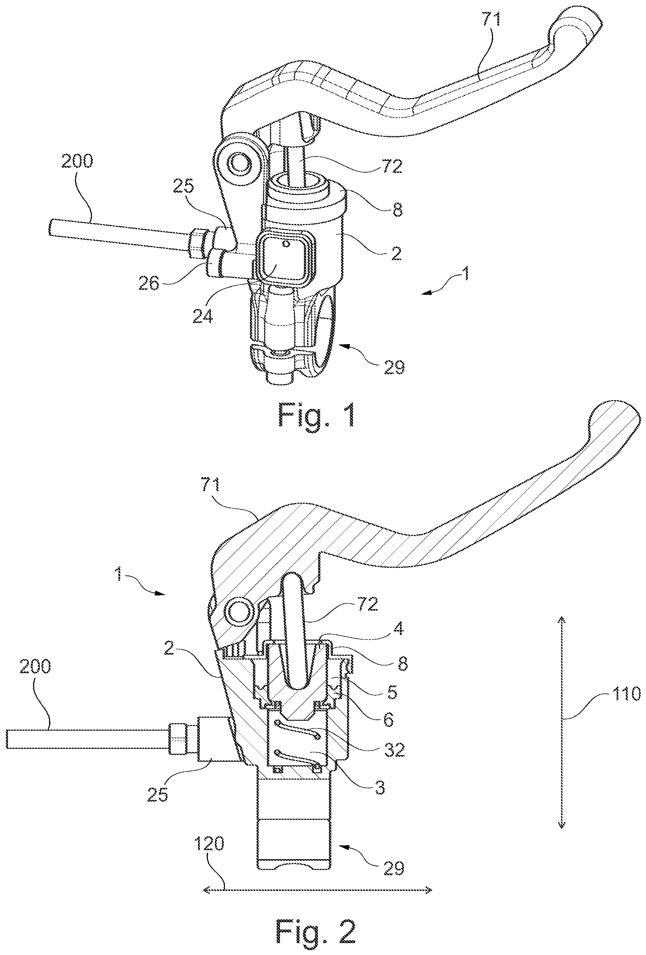

Fig. 1 zeigt einen erfindungsgemäßen Geberzylinder 1. In der gezeigten Ausführungsform wird der Geberzylinder 1 durch einen Handhebel 71 über eine Kolbenstange 72 betätigt. An einem Gehäuse 2 des Geberzylinders 1 ist ein Reservoir 24 für Hydraulikfluid angebracht. Ferner sind am Gehäuse 2 ein Anschluss 25 für eine Hydraulikleitung 200 sowie eine Entlüftungsschraube 26 für das Reservoir 24 vorgesehen. Das Gehäuse 2 weist ferner Mittel 29 zur Befestigung des Gehäuses 2 in einer Einbauumgebung auf, hier in Form einer Schelle zur Befestigung des Gehäuses 2 am Lenker eines Fahrrades (nicht gezeigt).

Fig. 2 zeigt eine Schnittansicht durch den Geberzylinder 1 aus Fig. 1. Etliche der gezeigten Elemente wurden bereits im Zusammenhang mit Fig. 1 erläutert. In Fig. 2 sind ferner dargestellt der über die Kolbenstange 72 zu betätigende Kolben 4, der, zumindest teilweise, in axialer Richtung 110 in einen im Gehäuse 2 befindlichen Druckraum 3 einführbar ist. Ferner zu erkennen ist, dass die Abdeckkappe 8 als Anschlag für den Kolben 4 dient, wenn dieser sich in axialer Richtung 110 aus dem Druckraum 3 herausbewegt. Im Gehäuse 2 sind, dem Kolben 4 benachbart, Dichtungshalter 5 und Dichtelement 6 angeordnet. Der Dichtungshalter 5 fixiert das Dichtelement 6 in axialer Richtung 110 und hat eine stabilisierende Wirkung auf das Dichtelement 6 in radialer Richtung 120. Im Druckraum 3 ist eine Rückstellfeder 32 vorgesehen;

die Aufgabe der Rückstellfeder 32 ist, den Kolben 4 bei Entlastung des Handhebels 71 in axialer Richtung 110 aus dem Druckraum 3 zu schieben. Wird der Kolben 4 in den Druckraum 3 geschoben, so baut sich im dort befindlichen Hydraulikfluid (nicht dargestellt) ein Druck auf, welcher über Anschluss 25 an die Hydraulikleitung 200 und von dort an einen, nicht gezeigten, Nehmerzylinder weitergegeben wird.

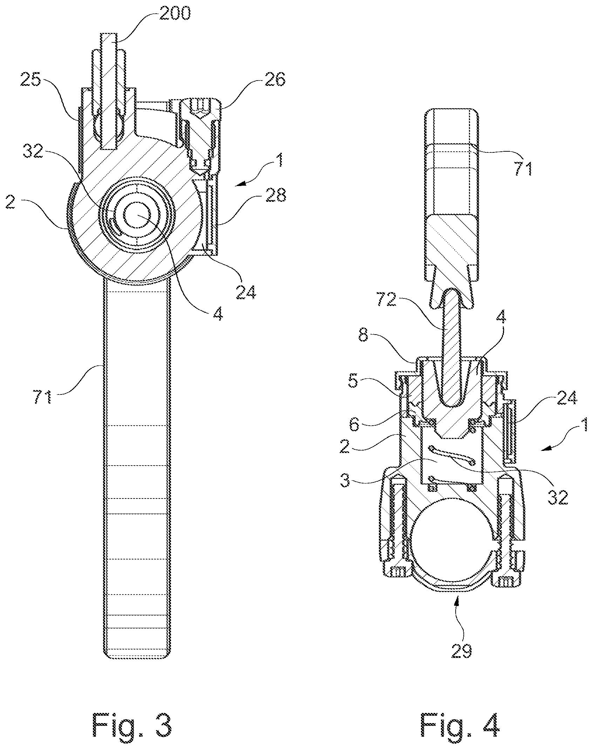

Fig. 3 zeigt eine Ansicht des in einer Ebene senkrecht zur axialen Richtung 110 (siehe Fig. 2) aufgeschnittenen Geberzylinders 1. Alle dargestellten Elemente wurden bereits in vorhergehenden Figuren gezeigt, bezeichnet ist nun auch der Deckel 28 des Reservoirs 24.

Fig. 4 zeigt eine weitere Schnittansicht eines erfindungsgemäßen Geberzylinders 1, wobei die Schnittebene parallel zur axialen Richtung 110 (siehe Fig. 2) verläuft. Alle bezeichneten Elemente wurden vorstehend bereits diskutiert.

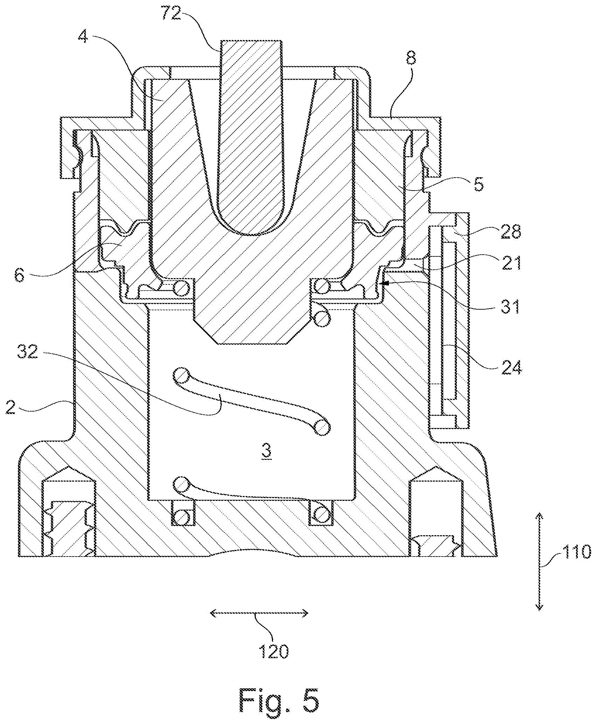

Fig. 5 zeigt eine Detailansicht des erfindungsgemäßen Geberzylinders in Form eines vergrößerten Ausschnitts aus der Figur 4. Die überwiegende Anzahl der bezeichneten Elemente wurde bereits vorstehend erläutert. Gut zu erkennen ist insbesondere die Anordnung von Dichtungshalter 5 und Dichtelement 6 im Gehäuse 2. Gezeigt ist in der Fig. 5 auch eine Zuführung 21 für Hydraulikfluid, welche das Reservoir 24 für Hydraulikfluid mit dem Druckraum 3 verbindet. Bei Bewegung des Kolbens 4 in axialer Richtung 110 in den Druckraum 3 wird das Dichtelement 6 elastisch deformiert, so dass Bereiche des Dichtelements 6 in radialer Richtung 120 nach außen, d.h. vom Kolben 4 weg, gedrängt werden und so die Zuführung 21 gegen den Druckraum 3 abdichten. Auf diese Weise kann im Druckraum 3 Druck aufgebaut werden, ohne dass sich dieser Druck über die Zuführung 21 dem Reservoir 24 mitteilt. Zur Abdichtung der Zuführung 21 ist eine Verschiebung des Dichtelements 6 in axialer Richtung 110, etwa zusammen mit dem Kolben 4, nicht erforderlich. Bewegt sich der Kolben 4 in axialer Richtung 110 aus dem Druckraum 3, so gibt das Dichtelement 6 die Zuführung 21 wieder frei und aus dem Reservoir 24 kann erforderlichenfalls Hydraulikfluid über die Zuführung 21 und einen Kanal 31 in den Druckraum 3 fließen, um dort etwaige Verluste an Hydraulikfluid auszugleichen. Der Kanal 31 wird durch das Dichtelement 6 und das Gehäuse 2 definiert und verläuft ringförmig um das Dichtelement 6. Die Wirkung der Abdeckkappe 8 als Anschlag für den Kolben 4 bei Bewegung des Kolbens 4 in axialer Richtung 110 aus dem Druckraum 3 heraus ist der Darstellung ebenfalls zu entnehmen.

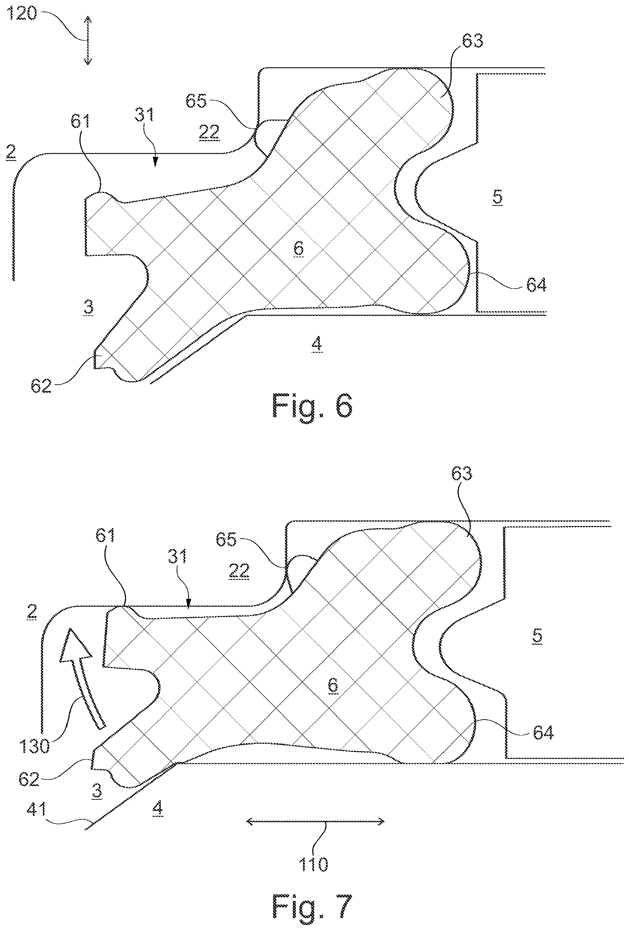

Fig. 6 und Fig. 7 zeigen das Dichtelement 6, eingesetzt in das Gehäuse 2, im Detail, sowie die Zusammenwirkung des Dichtelements 6 mit dem Kolben 4. Fig. 6 zeigt Dichtelement 6 eingesetzt in das Gehäuse 2 in unbelastetem Zustand im Querschnitt. Genauer sind Bereiche des Gehäuses 2, des Druckraums 3, des Dichtungshalters 5 und des Kolbens 4 gezeigt.

Gezeigt sind außerdem äußere Dichtstruktur 63 und innere Dichtstruktur 64, welche zusammen die Dichtstruktur bilden, welche den Druckraum 3 gegen eine Umgebung des Druckraums 3 abdichtet. Ferner sind äußere Dichtlippe 61 und innere Dichtlippe 62 gezeigt. Eine Anschlagsstruktur 65 des Dichtelements 6 stößt gegen einen Vorsprung 22 des Gehäuses 2 und gewährleistet so eine definierte Einbauposition des Dichtelements 6 in den Geberzylinder.

Die äußere Dichtstruktur 63 überragt die äußere Dichtlippe 61 in radialer Richtung 120 nach außen. Der Kanal 31 ist zum Druckraum 3 hin offen.

Fig. 7 zeigt das Dichtelement 6 in belastetem Zustand, also in einer Situation, in der der Kolben 4 in axialer Richtung 110 auf den Druckraum 3 zu bewegt wird. Bei Bewegung des Kolbens 4 in axialer Richtung 110 auf den Druckraum 3 zu drängt der Kolben 4, in der gezeigten Ausführungsform genauer die am Kolben 4 ausgebildete Fase 41, die innere Dichtlippe 62 in Richtung des Pfeils 130 nach außen. Durch die so bewirkte elastische Deformation des Dichtelements 6 wird die äußere Dichtlippe 61 gegen den Gehäusevorsprung 22 gedrückt.

Dadurch wird der Kanal 31 zum Druckraum 3 hin verschlossen. Insbesondere sind damit der Kanal 31 und die damit verbundene Zuführung 21 (siehe Fig. 5) für Hydraulikfluid gegen den sich bei der Bewegung des Kolbens 4 im Druckraum 3 aufbauenden Druck geschützt. In der gezeigten Schnittdarstellung ist die Zuführung 21 für Hydraulikfluid nicht erfasst, da sie außerhalb der Schnittebene liegt. Eine Abdichtung ist dennoch über den gesamten Umfang des ringförmigen Dichtelements 6 erforderlich, da der Kanal 31 ein ringförmiger Kanal ist, welcher mit der Zuführung 21 in Verbindung steht, wie in Fig. 5 dargestellt.

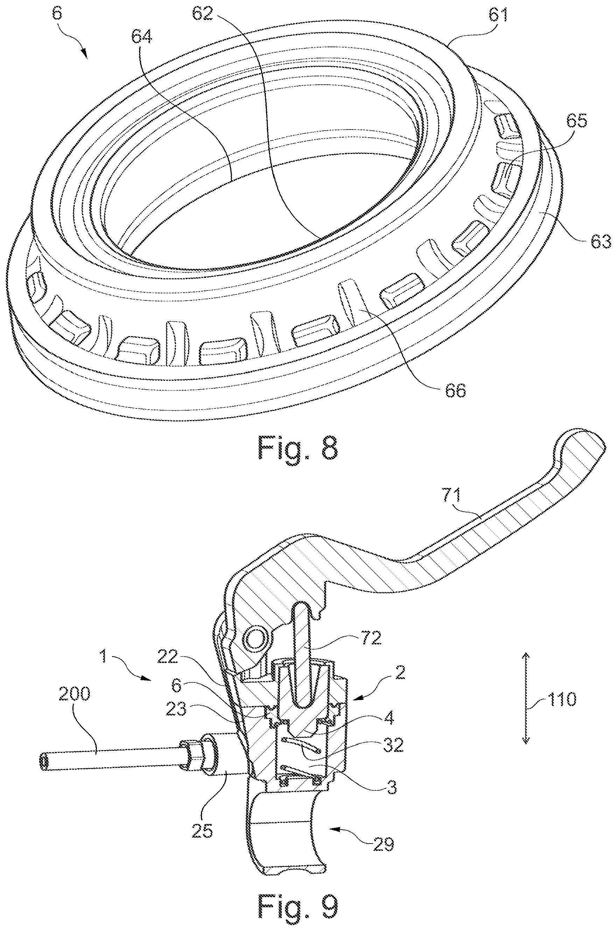

Fig. 8 ist eine perspektivische Ansicht einer Ausführungsform des Dichtelements 6. Das Dichtelement 6 ist ringförmig ausgebildet. Zu erkennen sind die äußere Dichtlippe 61, die innere Dichtlippe 62, die äußere Dichtstruktur 63 und die innere Dichtstruktur 64, welche jeweils über einen gesamten Umfang des Dichtelements 6 geschlossen sind, um ihre jeweilige Dichtfunktion erfüllen zu können.

Ferner sind Vorsprünge zu sehen, welche die Anschlagsstruktur 65 bilden. Die Anschlagsstruktur 65 ist nicht über den Umfang des Dichtelements 6 geschlossen, vielmehr gibt es Abstände zwischen den Vorsprüngen, so dass die Anschlagsstruktur 65 selbst keine dichtende Wirkung ausübt. Die gezeigte Ausführungsform des Dichtelements 6 weist zusätzlich Eintiefungen 66 auf, welche hier insbesondere zwischen den Vorsprüngen der Anschlagsstruktur 65 angeordnet sind. Die Eintiefungen 66 gewährleisten eine Nachführung von Hydraulikfluid, welches über die Zuführung 21 (siehe Fig. 5) im Bereich zwischen der äußeren Dichtlippe 61 und der äußeren Dichtstruktur 63 auf das Dichtelement 6 gelangt, in den Druckraum 3 (siehe Fig. 5), sowie ein verbessertes Entlüften, auch in Anbetracht von Fertigungstoleranzen.

Äußere Dichtstruktur 63 und innere Dichtstruktur 64 besitzen in dem gezeigten Ausführungsbeispiel O-Ring-Geometrie.

Fig. 9 zeigt eine weitere Ausführungsform des erfindungsgemäßen Geberzylinders 1, ähnlich der in Figuren 1 und 2 gezeigten Ausführungsform. In der in Fig. 9 gezeigten Ausführungsform ist das Gehäuse 2 zweiteilig ausgebildet, das Gehäuse 2 umfasst einen ersten Gehäuseteil 22 und einen zweiten Gehäuseteil 23. Der erste Gehäuseteil 22 trägt die mechanischen Elemente zur Betätigung des Kolbens 4, hier sind das konkret Handhebel 71 und Kolbenstange 72. Der erste Gehäuseteil 22 wirkt ferner als Schutz des Geberzylinders 1 vor Verschmutzung und als Anschlag für den Kolben 4, wenn dieser sich in axialer Richtung 110 aus dem Druckraum 3 bewegt. Damit übernimmt der erste Gehäuseteil 22 die Funktionen der Abdeckkappe 8 in der in Figuren 1 und 2 dargestellten Ausführungsform. Ferner ist der erste Gehäuseteil 22 so ausgebildet, dass der erste Gehäuseteil 22 auch die Funktion zur Fixierung und Stabilisierung von Dichtelement 6 des Dichtungshalters 5 der in Figuren 1 und 2 dargestellten Ausführungsform übernimmt. So werden weitere Komponenten eingespart. Im zweiten Gehäuseteil 23 ist der Druckraum 3 ausgebildet, in dem auch in dieser Ausführungsform eine Rückstellfeder 32 angeordnet ist. Ferner ist am zweiten Gehäuseteil 23 der Anschluss 25 für eine Hydraulikleitung 200 vorgesehen. Auch Mittel 29 zur Befestigung des Gehäuses 2 in einer Einbauumgebung, hier konkret am Lenker eines Fahrrads, sind am zweiten Gehäuseteil 23 vorgesehen.

Erster Gehäuseteil 22 und zweiter Gehäuseteil 23 können beispielsweise miteinander verschweißt, verschraubt, vernietet, verlötet, verpresst, verklebt oder anderweitig verbunden sein. Wichtig dabei ist, dass die Verbindung den bei Betätigung des Kolbens 4 auftretenden mechanischen Belastungen standhält.

Es sind auch Ausführungsformen denkbar, in denen der erste Gehäuseteil die Funktion der Abdeckkappe übernimmt, also den Geberzylinder vor Verschmutzung schützt und als Anschlag für den Kolben wirkt, wobei aber dennoch ein separater Dichtungshalter vorgesehen ist.

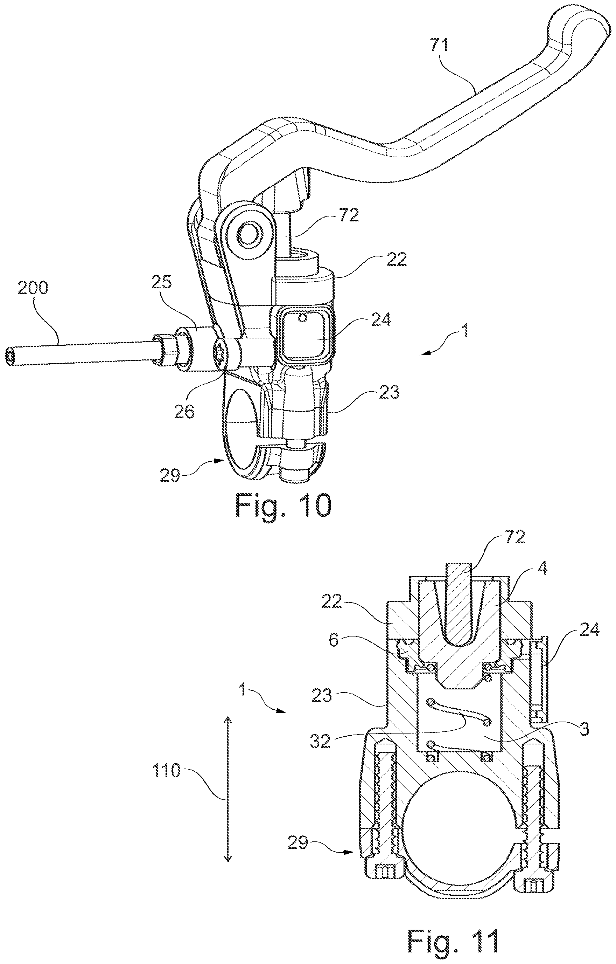

Fig. 10 zeigt eine perspektivische Ansicht des erfindungsgemäßen Geberzylinders 1 aus Fig. 9. Außer den bereits zu Fig. 9 erläuterten Elementen ist hier noch das Reservoir 24 zu erkennen, welches am zweiten Gehäuseteil 23 angeordnet ist. Auch ist die Entlüftungsschraube 26 dargestellt.

Fig. 11 ist eine Schnittansicht eines Teils des erfindungsgemäßen Geberzylinders 1 aus Fig. 9. Die überwiegende Anzahl der bezeichneten Elemente wurde bereits im Kontext der Figuren 9 und 10 erläutert. In der gezeigten Ansicht ist gut zu erkennen, dass der erste Gehäuseteil 22 als Anschlag für den Kolben 4 wirkt, wenn dieser in axialer Richtung 110 aus dem Druckraum 3 heraus bewegt wird. Ebenso ist die Funktion des ersten Gehäuseteils 22 zur Stützung und Stabilisierung des Dichtelements 6 erkennbar.

In der in den Figuren 9 bis 11 dargestellten Ausführungsform trägt der erste Gehäuseteil 22 mit Handhebel 71 und Kolbenstange 72 die mechanischen Elemente zur Verschiebung des Kolbens 4. Der zweite Gehäuseteil 23 umfasst hingegen die hydraulischen Elemente, d.h. den Druckraum 3, den Anschluss 25 und das Reservoir 24. Zusätzlich trägt der zweite Gehäuseteil 23 auch die Mittel 29 zur Befestigung des Gehäuses 2 in einer Einbauumgebung. Diese Aufteilung der Funktionen auf den ersten Gehäuseteil 22 und den zweiten Gehäuseteil 23 ist ein Beispiel einer Aufteilung von Funktionen. Andere Aufteilungen der Funktionen sind ebenfalls denkbar. Insbesondere können die Mittel 29 zur Befestigung des Gehäuses 2 in einer Einbauumgebung auch am ersten Gehäuseteil 22 vorgesehen sein. Dabei könnte sich der erste Gehäuseteil 22 in axialer Richtung 110 über den zweiten Gehäuseteil 23 erstrecken, bzw. der zweite Gehäuseteil 23 könnte in axialer Richtung 110 in den ersten Gehäuseteil 22 eingeschoben werden. Alternativ könnten die Mittel 29 zur Befestigung des Gehäuses 2 in einer Einbauumgebung auch seitlich am ersten Gehäuseteil 22 angebracht sein.

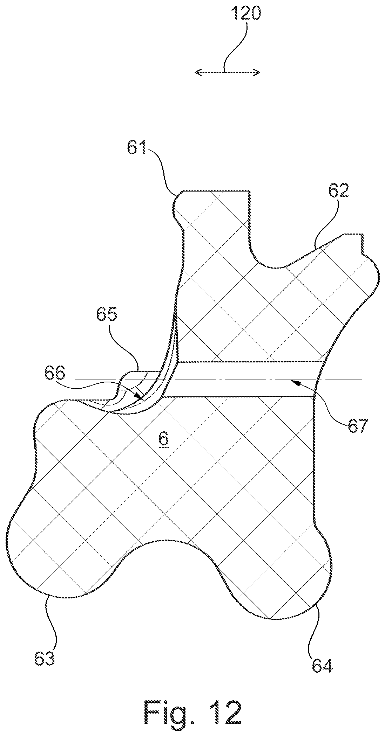

Fig. 12 zeigt ein weiteres Ausführungsbeispiel eines Dichtelements 6 in Schnittansicht. Das Dichtelement 6 weist eine äußere Dichtlippe 61, eine innere Dichtlippe 62, eine äußere Dichtstruktur 63, und eine innere Dichtstruktur 64 auf. Ferner weist das Dichtelement 6 eine Anschlagsstruktur 65 sowie Eintiefungen 66 auf, wie sie bereits vorstehend, insbesondere im Zusammenhang mit den Figuren 6 bis 8, diskutiert wurden. In der in Fig. 12 gezeigten Ausführungsform weist das Dichtelement 6 mindestens eine radiale, also in radialer Richtung 120 verlaufende, Bohrung 67 auf, welche sich von einer Position zwischen der äußeren Dichtlippe 61 und der äußeren Dichtstruktur 63 zu einer Position zwischen der inneren Dichtlippe 62 und der inneren Dichtstruktur 64 erstreckt.

### Bezugszeichenliste

- 1: Geberzylinder
- 2: Gehäuse
- 3: Druckraum
- 4: Kolben
- 5: Dichtungshalter
- 6: Dichtelement
- 8: Abdeckkappe
- 21: Zuführung für Hydraulikfluid
- 22: erster Gehäuseteil
- 23: zweiter Gehäuseteil
- 24: Reservoir
- 25: Anschluss für Hydraulikleitung
- 26: Entlüftungsschraube
- 28: Deckel des Reservoirs
- 29: Mittel zur Befestigung des Gehäuses
- 31: Kanal
- 32: Rückstellfeder
- 41: Fase
- 61: äußere Dichtlippe
- 62: innere Dichtlippe
- 63: äußere Dichtstruktur
- 64: innere Dichtstruktur
- 65: Anschlagsstruktur
- 66: Eintiefung
- 67: Bohrung
- 71: Handhebel
- 72: Kolbenstange
- 110: axiale Richtung
- 120: radiale Richtung
- 130: Pfeil
- 200: Hydraulikleitung

## Patentansprüche

1. Geberzylinder (1) für ein Bremssystem mit einem Gehäuse (2), einem in dem Gehäuse (2) ausgebildeten Druckraum (3), einem zumindest teilweise in den Druckraum (3) einführbaren Kolben (4), einem am Gehäuse (2) angebrachten Reservoir (24) für ein Hydraulikfluid, einer Zuführung (21) für das Hydraulikfluid aus dem Reservoir (24) in den Druckraum (3) und einem zwischen Gehäuse (2) und Kolben (4) angeordneten Dichtelement (6) mit einer äußeren Dichtlippe (61) zur Abdichtung der Zuführung (21) gegen den Druckraum (3), wobei am Gehäuse (2) ein Handhebel (71) zur Verschiebung des Kolbens (4) vorgesehen ist, **dadurch gekennzeichnet, dass** das Dichtelement (6) auf einer dem Druckraum (3) abgewandten Seite des Dichtelements (6) eine Dichtstruktur (63, 64) ausgebildet hat, welche den Druckraum (3) gegen eine Umgebung des Druckraums (3) abdichtet und dass das Gehäuse (2) zweiteilig ausgebildet ist, derart, dass ein erster Gehäuseteil (22) den Handhebel (71) und eine Kolbenstange (72) zur Betätigung des Kolbens (4) trägt und ein zweiter Gehäuseteil (23) den Druckraum (3) umschließt.

2. Geberzylinder (1) nach Anspruch 1, wobei das Dichtelement (6) eine innere Dichtlippe (62) aufweist, welche dem Druckraum (3) zugewandt und dem Kolben (4) benachbart ist.

3. Geberzylinder (1) nach einem der vorhergehenden Ansprüche, wobei das Dichtelement (6) eine Anschlagsstruktur (65) aufweist, welche am Dichtelement (6) zwischen der äußeren Dichtlippe (61) und der Dichtstruktur (63) durch einen oder mehrere am Dichtelement (6) ausgeformte Vorsprünge gebildet und dazu vorgesehen ist, gegen das Gehäuse (2) zu stoßen.

4. Geberzylinder (1) nach einem der vorhergehenden Ansprüche, wobei das Dichtelement (6) wenigstens eine radiale Bohrung (67) aufweist.

5. Geberzylinder (1) nach einem der vorhergehenden Ansprüche, wobei ein Dichtungshalter (5) zur Fixierung des Dichtelements (6) im Gehäuse (2) vorgesehen ist.

6. Geberzylinder (1) nach einem der vorstehenden Ansprüche, wobei der erste Gehäuseteil (22) Mittel (29) zur Befestigung des Geberzylinders (1) in einer Einbauumgebung umfasst.

7. Geberzylinder (1) nach einem der vorhergehenden Ansprüche, wobei im Druckraum (3) eine Rückstellfeder (32) für den Kolben (4) vorgesehen ist.

## Claims

1. A master cylinder (1) for a brake system having a housing (2), a pressure chamber (3) formed in the housing (2), a piston (4) that can be at least partially inserted in the pressure chamber (3), a reservoir (24) for a hydraulic fluid mounted on the housing (2), a feed (21) for the hydraulic fluid from the reservoir (24) into the pressure chamber (3), and a sealing element (6) arranged between the housing (2) and the piston (4) with an outer sealing lip (61) for sealing the feed (21) from the pressure chamber (3), wherein a hand lever (71) for displacing the piston (4) is provided on the housing (2), **characterised in that** the sealing element (6) has a sealing structure (63, 64) on a side of the sealing element (6) facing away from the pressure chamber (3), which sealing structure seals the pressure chamber (3) from an environment of the pressure chamber (3), and **in that** the housing (2) is designed in two parts in such a way that a first housing part (22) carries the hand lever (71) and a piston rod (72) for actuating the piston (4) and a second housing part (23) encloses the pressure chamber (3).

2. The master cylinder (1) according to claim 1, wherein the sealing element (6) has an inner sealing lip (62) that faces the pressure chamber (3) and is adjacent to the piston (4).

3. The master cylinder (1) according to any one of the preceding claims, wherein the sealing element (6) has a stop structure (65) formed on the sealing element (6) between the outer sealing lip (61) and the sealing structure (63) by one or more projections formed on the sealing element (6) and is provided to abut against the housing (2).

4. The master cylinder (1) according to any one of the preceding claims, wherein the sealing element (6) has at least one radial bore (67).

5. The master cylinder (1) according to any one of the preceding claims, wherein a seal holder (5) is provided for fixing the sealing element (6) in the housing (2).

6. The master cylinder (1) according to any one of the preceding claims, wherein the first housing part (22) comprises means (29) for fastening the master cylinder (1) in an installation environment.

7. The master cylinder (1) according to any one of the preceding claims, wherein a return spring (32) for the piston (4) is provided in the pressure chamber (3).

## Revendications

1. Maître-cylindre (1) pour un système de freinage, comprenant un boîtier (2), une chambre de pression (3) formée dans le boîtier (2), un piston (4) pouvant être introduit au moins partiellement dans la chambre de pression (3), un réservoir (24) pour un fluide hydraulique, monté sur le boîtier (2), une alimentation (21) pour le fluide hydraulique depuis le réservoir (24) jusque dans la chambre de pression (3) et un élément d'étanchéité (6) agencé entre le boîtier (2) et le piston (4) avec une lèvre d'étanchéité extérieure (61) pour l'étanchéité de l'alimentation (21) contre la chambre de pression (3), un levier manuel (71) étant prévu sur le boîtier (2) pour déplacer le piston (4), **caractérisé en ce que** l'élément d'étanchéité (6) présente une structure d'étanchéité (63, 64), formée sur un côté de l'élément d'étanchéité (6) opposé à la chambre de pression (3), qui assure l'étanchéité de la chambre de pression (3) par rapport à un environnement de la chambre de pression (3) et **en ce que** le boîtier (2) est formé en deux parties, de façon qu'une première partie de boîtier (22) porte le levier manuel (71) et une tige de piston (72) pour l'actionnement du piston (4) et qu'une seconde partie de boîtier (23) entoure la chambre de pression (3).

2. Maître-cylindre (1) selon la revendication 1, dans lequel l'élément d'étanchéité (6) présente une lèvre d'étanchéité intérieure (62) qui est tournée vers la chambre de pression (3) et adjacente au piston (4).

3. Maître-cylindre (1) selon l'une quelconque des revendications précédentes, dans lequel l'élément d'étanchéité (6) présente une structure de butée (65) qui est formée sur l'élément d'étanchéité (6) entre la lèvre d'étanchéité extérieure (61) et la structure d'étanchéité (63) par une ou plusieurs protubérances formées sur l'élément d'étanchéité (6) et qui est prévue pour venir buter contre le boîtier (2).

4. Maître-cylindre (1) selon l'une quelconque des revendications précédentes, dans lequel l'élément d'étanchéité (6) présente au moins un alésage radial (67).

5. Maître-cylindre (1) selon l'une quelconque des revendications précédentes, dans lequel un support d'étanchéité (5) est prévu pour fixer l'élément d'étanchéité (6) dans le boîtier (2).

6. Maître-cylindre (1) selon l'une quelconque des revendications précédentes, dans lequel la première partie de boîtier (22) comprend des moyens (29) pour fixer le maître-cylindre (1) dans un environnement de montage.

7. Maître-cylindre (1) selon l'une quelconque des revendications précédentes, dans lequel un ressort de rappel (32) pour le piston (4) est prévu dans la chambre de pression (3).
